Europäisches Patentamt

European Patent Office

Office européen des brevets

(19)

(11) Numéro de publication: **0 278 856**
A1

(12) **DEMANDE DE BREVET EUROPEEN**

(21) Numéro de dépôt: 88400232.0

(22) Date de dépôt: 02.02.88

(51) Int. Cl.⁴: **B 60 K 41/10**

(30) Priorité: 03.02.87 FR 8701321

(43) Date de publication de la demande:
17.08.88 Bulletin 88/33

(84) Etats contractants désignés:
BE DE ES GB IT SE

(71) Demandeur: **RENAULT VEHICULES INDUSTRIELS**
**Société Anonyme dite:**
**129 rue Servient "La Part Dieu"**
**F-69003 Lyon (FR)**

(72) Inventeur: **Drutel, Yves**
**17, Résidence Les Hauts de Brignais**
**F-69530 Brignais (FR)**

**Kuntz, Pierre**
**8, rue du Haut Bois Roulant**
**F-28560 Vercheres Sur Vesgre (FR)**

(74) Mandataire: **Kessler, Michel**
**R.N.U.R. - S. 0804 B.P.103 8 & 10, avenue Emile Zola**
**F-92109 Boulogne Billancourt (FR)**

(54) Dispositif et procédé électronique de commande d'un groupe motopropulseur lors des passages des rapports sous couple.

(57) Dispositif de commande électronique d'un groupe moto-propulseur lors des passages de rapport sous couple, dont le moteur est à injection électronique, comprenant un calculateur (1) de gestion du groupe motopropulseur effectuant simultané-ment le contrôle du couple moteur à transmettre en comman-dant l'injection et le contrôle de l'accélération du véhicule en commandant la pression hydraulique délivrée dans les em-brayages.

FIG.1

## Description

### DISPOSITIF ET PROCEDE ELECTRONIQUE DE COMMANDE D'UN GROUPE MOTOPROPULSEUR LORS DES PASSAGES DES RAPPORTS SOUS COUPLE.

L'invention se rapporte à un dispositif électronique de commande d'un groupe motopropulseur, dont le moteur est du type à injection pilotée électroniquement et, dont la boîte de vitesse est du type à passage de rapport sous couple.

Afin de diminuer l'énergie dissipée dans les embrayages de la boîte de vitesses lors des changements de rapports, il est judicieux de réduire le temps des passages sous couple.

Pour cela, le but de l'invention est de contrôler simultanément le couple moteur à transmettre et l'accélération du véhicule.

Dans ce but, le dispositif de commande du groupe motopropulseur contrôle simultanément :
- le régime moteur par le pilotage de l'injection de carburant dans les cylindres,
- la transmission de la puissance par la commande des embrayages,
- l'accélération du véhicule par la modulation de la pression hydraulique dans les embrayages.

Le dispositif de commande électronique d'un groupe motopropulseur selon l'invention, dont le moteur est à injection pilotée par un calculateur électronique et dont la boîte de vitesses est du type à passage des rapports sous couple, caractérisé en ce qu'il comprend :
- un calculateur électronique de gestion du groupe motopropulseur,
- un circuit de régulation de pression hydraulique dans la boîte de vitesses,
- de capteurs de vitesse moteur N, et de vitesse d'embrayages ;
le calculateur effectuant simultanément lors des passages sous couple le contrôle du couple moteur à transmettre en commandant l'injection de carburant dans le moteur et le contrôle de l'accélération du véhicule en commandant la pression hydraulique délivrée dans les embrayages par le circuit régulateur.

D'autres caractéristiques et avantages de l'invention apparaîtront à la lecture de la description qui suit, illstrée par les figures suivantes qui représentent :
- la figure 1 : un schéma synoptique du dispositif de commande selon l'invention ;
- la figure 2 : le chronogramme d'un cycle de pilotage du groupe motopropulseur par le dispositif selon l'invention;
- la figure 3 : un schéma synoptique du système de régulation de pression hydraulique selon l'invention;
- la figure 4 : un schéma synoptique du système de régulation de l'accélération du véhicule selon l'invention ;
- la figure 5 : l'évolution dans le temps de régime moteur et de la pression dans les embrayages de la bôite de vitesses, selon le procédé de l'invention.

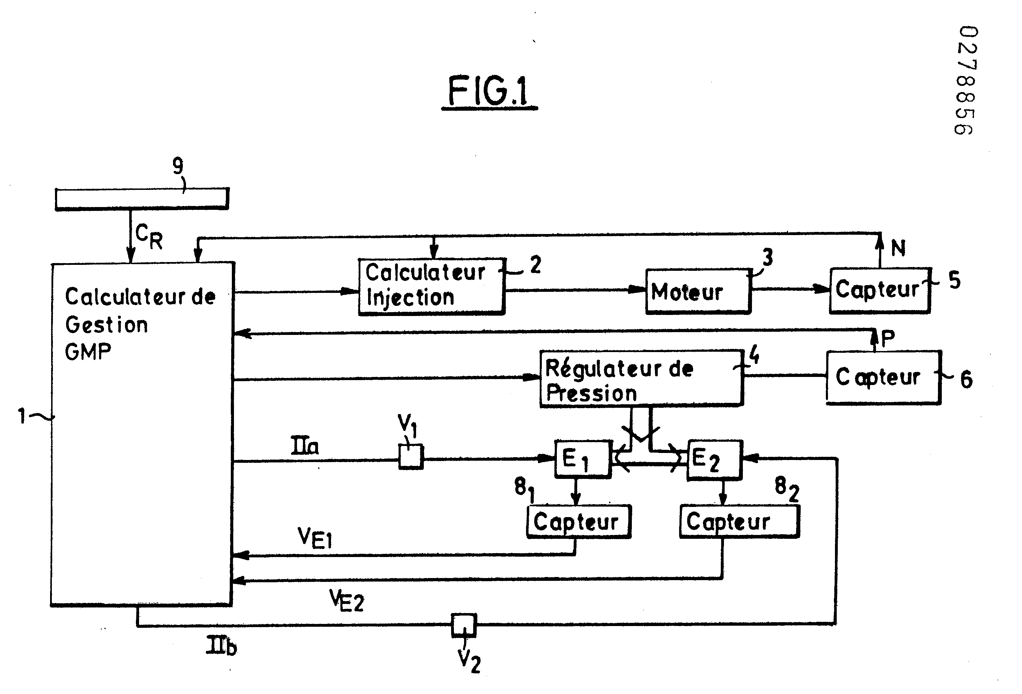

La figure 1 représente un schéma synoptique du dispositif de commande selon l'invention comportant un calculateur de gestion 1 du fonctionnement du moteur et de la boîte de vitesses reliée d'une part à un calculateur électronique 2 de pilotage de l'injection du carburant dans le moteur 3 et d'autre part à un circuit 4 de régulation de pression hydraulique dans les embrayages de la boîte de vitesses. Les deux calculateurs 1 et 2 sont chacun dotés d'un circuit microprocesseur.

De façon classique, le calculateur électronique 2 assure la réalisation d'une consigne de débit de carburant injecté dans les cylindres du moteur, soit par le pilotage d'une crémaillère, soit par le pilotage direct des injecteurs et le contrôle de la pression d'injection dans les cylindres.

Un capteur 5 de vitesse moteur N délivre au calculateur d'injection 2 et au calculateur de gestion 1 une information sur la vitesse moteur sous forme d'un nombre $N_l$ d'impulsions par tour moteur.

Le calculateur 1 de gestion associé au circuit 4 de régulation de pression hydraulique comportant une électrovanne de commande associée à une vanne de régulation, délivre une pression P d'alimentation permettant de piloter les différents organes de la boîte de vitesses notamment les embrayages, au nombre de deux $E_1$ et $E_2$ dans le cas non limitatif de la figure 1.

Un capteur de pression 6 délivre au calculateur de gestion 1 des informations sur la pression hydraulique régulée.

A ce circuit 4 de régulation de pression hydraulique est associée une vanne de commande $V_1$ et $V_2$ pour chaque embrayage $E_1$ et $E_2$ respectivement, de façon à aiguiller la pression régulée sur l'embrayage que l'on est en train de piloter.

Un capteur de vitesse $8_1$ et $8_2$ est associé à chaque embrayage $E_1$ et $E_2$ respectivement et délivre au calculateur de gestion 1 des informations, sous forme de trains d'impulsions, sur les vitesses $V_{E_1}$ et $V_{E_2}$ de ces embrayages $E_1$ et $E_2$ respectivement.

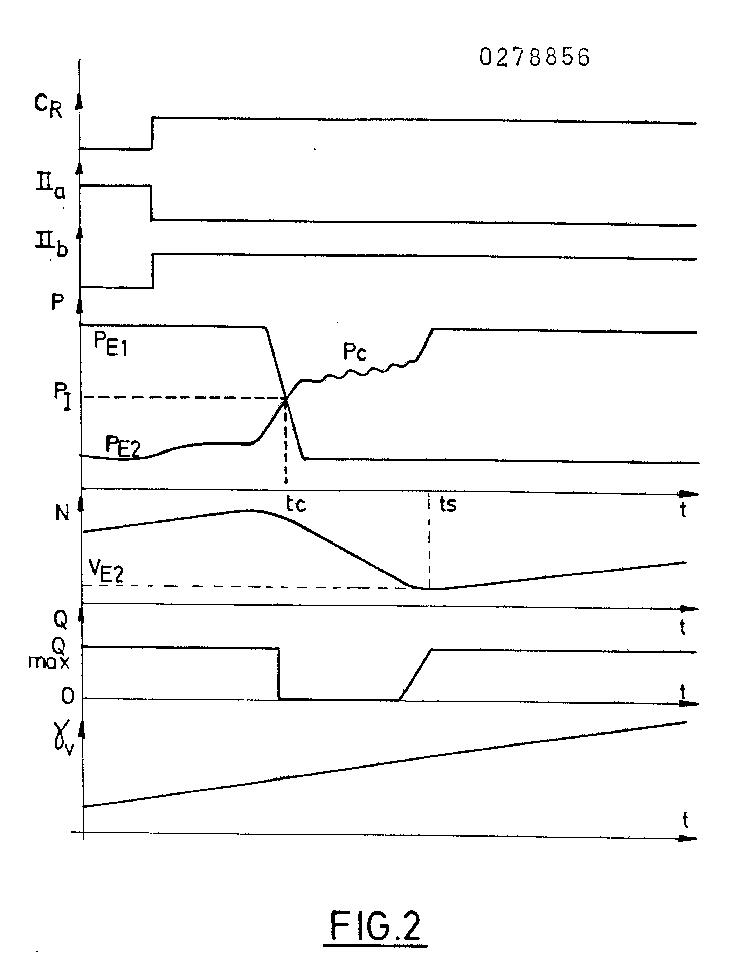

Le fonctionnement de ce dispositif précédemment décrit est le suivant expliqué à l'aide de la figure 2 représentant le chronogramme d'un cycle de pilotage du groupe motopropulseur par le dispositif selon l'invention.

Le calculateur électronique 1 de gestion du fonctionnement du moteur et de la boîte de vitesses a la charge de diminuer le temps de passage entre deux rapports de boîte. Lorsqu'il reçoit l'ordre $C_R$ d'un tel passage, par exemple d'un circuit 9 de détection de la position de la pédale d'accélérateur, il remplace le calculateur d'injection 2 dans son rôle de pilotage de l'injection de carburant dans les cylindres, il envoie à la vanne de commande de l'embrayage $E_1$ par exemple un ordre $II_a$ de coupure d'embrayage et un ordre $II_b$ de pilotage de

2

la vanne de commande de l'embrayage $E_2$, ces ordres se présentant sous forme d'impulsions.

L'embrayage $E_1$ n'est plus piloté électriquement mais l'existence d'une mémoire hydraulique le maintient sous pression $P_E$, tandis que l'embrayage $E_2$ est alors soumis à une pression hydraulique, de la part du système 4 de régulation, qui est régulée à une valeur maximale pour réduire le temps de remplissage de l'embrayage $E_2$.

Dès que la pression $P_{E_2}$ dans l'embrayage $E_2$ atteint un niveau suffisant pour qu'il y ait commutation hydraulique entre les deux embrayages $E_1$ et $E_2$, l'embrayage $E_1$ n'est plus maintenu sous pression.

Dès cette commutation hydraulique à l'instant $t_c$, il y a perte de synchronisme entre le moteur et l'embrayage $E_1$ et le calculateur 1 de gestion détecte alors, grâce aux capteurs de vitesse 5 et $8_1$, $8_2$, un glissement entre la vitesse moteur N et la vitesse $V_E$, de cet embrayage $E_1$, $V_E$, devenant différent de N puisque l'embrayage n'est plus entraîné par le moteur.

Selon l'invention, à l'instant $t_c$ de la commutation, la pression $P_{E_2}$ hydraulique dans l'embrayage $E_2$ est asservie à une consigne de pression $P_1$ qui est fonction du couple moteur à transmettre. Or le couple moteur est calculé à partir du débit de carburant injecté, en $mm^3$ par coup d'injection, et du régime moteur N. Dès détection du glissement entre le moteur et l'embrayage $E_1$, le calculateur 1 de gestion lit la vitesse $V_{E_2}$ de l'embrayage $E_2$ qui est inférieure à la vitesse $V_E$, de l'embrayage $E_1$ et asservit le régime moteur N à cette même vitesse $V_{E_2}$ par le pilotage de l'injection puisque l'on souhaite que le régime N chute lorsque l'on "monte un rapport". Il est souhaitable que le régime moteur N chute d'une valeur correspondant à la différence de vitesses entre les deux embrayages.

Cette nouvelle consigne de régime moteur N, imposée pendant le transfert d'embrayage par le calculateur 1 de gestion prioritaire sur le calculateur 2 d'injection, est obtenue par coupure totale ou partielle de l'injection. En cas de coupure totale du débit O de carburant injecté, le couple moteur transmis n'est plus un couple thermique mais seule l'énergie cinétique du moteur est transmise. Le rétablissement du couple thermique du moteur a lieu à l'instant t, dès que le régime moteur N est égal à la vitesse $V_{E_2}$ de l'embrayage $E_2$ donc quand il y a à nouveau synchronisme. En cas de coupure partielle de l'injection, le calculateur 1 de gestion élabore une consigne de débit de carburant injecté en $mm^3$ par coup d'injecteur suivant l'équation de régulation suivante:

$$Q_{inj} = K_p (N_c - N) + K_I \, \Sigma \cdot \varepsilon + K_D \frac{\Delta \varepsilon}{\Delta T}$$

avec N régime moteur mesuré
$N_c$ régime de consigne
$\varepsilon = N_c - N$
$K_p$, $K_I$ et $K_D$ coefficients de correction proportionnelle intégrale et dérivée.

Par le choix des coefficients de régulation moteur $K_p$, $K_I$ et $K_D$, le calculateur 1 de gestion peut régler le temps de passage entre deux rapport de boîte.

Tout ceci a pour but de réduire le temps de passage entre deux rapports. Mais pour le confort du conducteur du véhicule, ce passage doit s'effectuer de façon continue sans accoup. C'est pourquoi simultanément le calculateur 1 de gestion contrôle l'accélération de l'embrayage $E_2$, obtenue par dérivée de la vitesse $V_{E_2}$ délivrée par le capteur $8_2$, qui est aussi l'accélération du véhicule $\gamma_v$. Pour contrôler cette accélération $\gamma_{E_2}$, il faut contrôler le couple transmis par l'embrayage, or ce couple est directement proportionnel à la pression hydraulique appliquée à cet embrayage, c'est pourquoi le calculateur 1 de gestion corrige la consigne de pression hydraulique $P_c$ appliquée au circuit 4 de régulation de pression dans les embrayages pour que cette accélération véhicule soit toujours positive et le plus proche possible de l'accélération choisie à l'avance.

A l'instant $t_s$ de détection du synchronisme entre le moteur et l'embrayage $E_2$ - glissement nul - la consigne de pression hydraulique d'embrayage prend une valeur fonction du couple moteur à transmettre, relativement élevée pour être sûr de transmettre le couple maximum avec sécurité.

Sur la figure 2, on voit qu'à partir de cet instant $t_s$ le régime N, qui est égal à la vitesse $V_{E_2}$ de l'embrayage $E_2$, remonte car l'accélération $\gamma_v$ du véhicule est croissante et que l'injection du carburant est à nouveau assurée.

Ce contrôle de la consigne de pression hydraulique $P_c$ appliquée au circuit 4 de régulation de pression dans les embrayages est réalisé par le calculateur 1 de gestion de la façon suivante.

On a vu plus haut que pour contrôler l'accélération en sortie de boîte de vitesses, il était nécessaire de réguler très précisément et sans retard la pression hydraulique appliquée à l'embrayage considéré $E_2$.

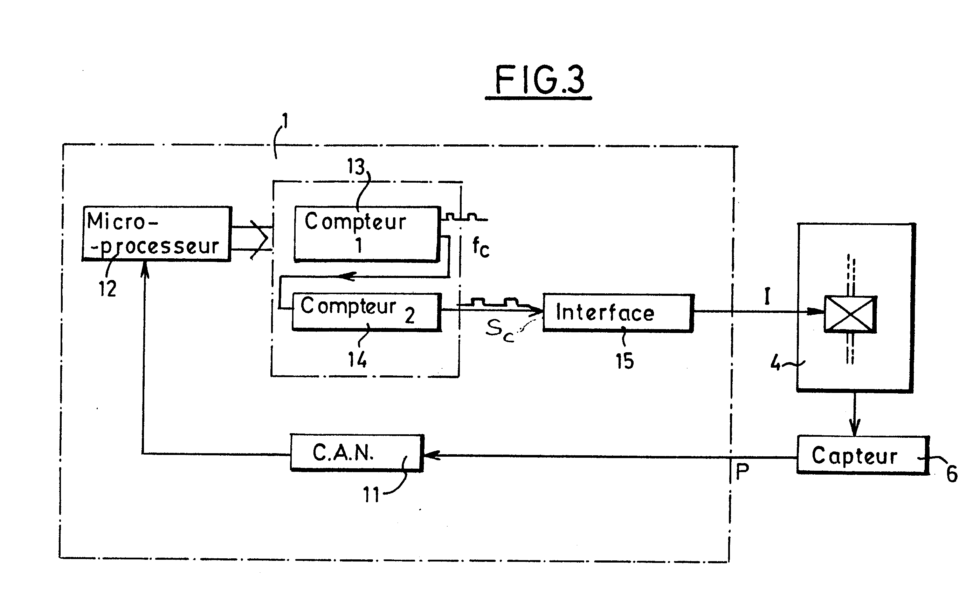

La figure 3 représente un schéma synoptique du système de régulation de pression hydraulique, comprenant d'une part le calculateur 1 de gestion et d'autre part le circuit 4 de régulation. Le calculateur 1 pilote à une fréquence déterminée $f_e = 80$ Hz une électrovanne 10 dont le rôle est de hâcher une pression et dont la section moyenne équivalente est contrôlable par la largeur de l'impulsion électrique qui la commande. Cette électrovanne 10 associée à une vanne de régulation tarée, une pompe hydraulique et une contre-réaction munie de gicleurs permet d'obtenir une pression P d'alimentation, dite pression de ligne, qui pilote les différents organes de la boîte de vitesses.,

Le capteur 6 de pression envoie la valeur de la pression existant dans l'embrayage à un circuit convertisseur analogique-numérique 11 du calculateur 1 de gestion. Le microprocesseur 12 du calculateur 1 compare cette valeur de pression P mesurée à une consigne de pression $P_c$ qu'il a calculée pour chaque phase de pilotage, c'est-à-dire en fonction du couple moteur à transmettre et de l'accélération véhicule souhaitée.

En fonction du résultat de cette comparaison, le microprocesseur 12 fixe la fréquence $f_e$ de pilotage de l'électrovanne par le chargement d'un compteur 13 du claculateur 1 et élabore le temps $t_d$ de commande d'ouverture de l'électrovanne dont il charge un autre compteur 14 du calculateur programmé en monostable. Ce compteur reçoit aussi la fréquence $f_e$ de pilotage, et délivre en sortie un signal de commande $S_c$ d'ouverture de l'électrovanne, sous forme d'impulsions basse tension. Un circuit d'interface 15 transforme ce train d'impulsions en un courant dit I d'appel maintien, de valeur d'appel suffisamment élevée pour diminuer le temps d'ouverture de l'électrovanne et de valeur de maintien minimale pour réduire le temps de fermeture.

La boucle de programme permettant d'effecteur cette régulation de pression est parcourue au moins toutes les 12,5 ms qui est la base de temps de pilotage des électrovannes.

Après que le contrôle de la pression dans les embrayages ait été assuré, il faut que le calculateur 1 de gestion contrôle que l'accélération véhicule obtenue à partir de cette pression soit conforme à l'accélération souhaitée pour le confort du véhicule.

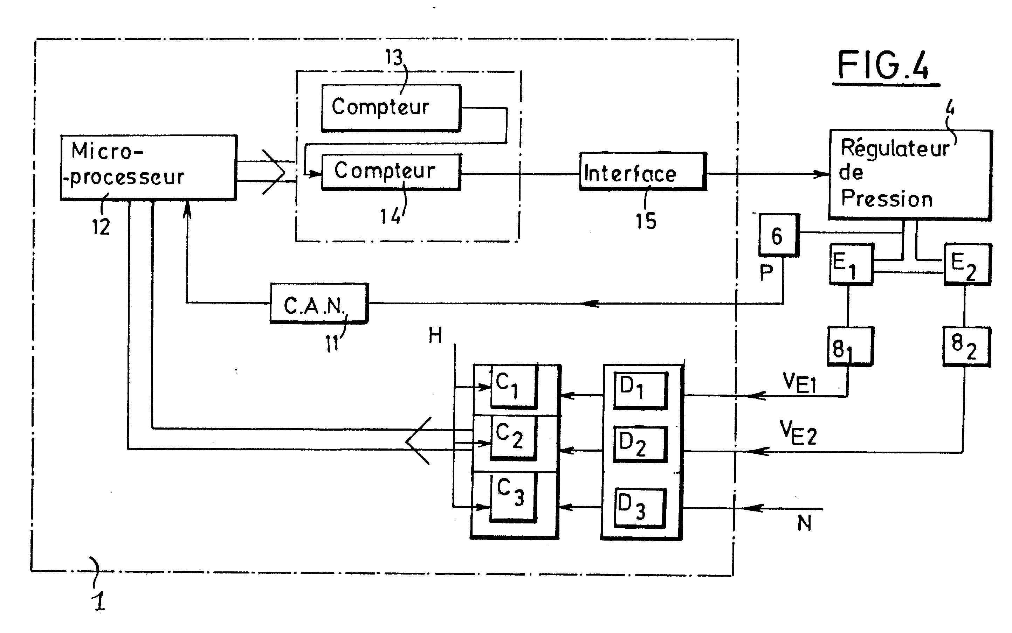

La figure 4 représente un schéma synoptique du système de régulation de l'accélération véhicule. Pour cela, le calculateur 1 effectue en permanence la mesure de la vitesse moteur N et des embrayages $E_1$ et $E_2$ à partir des signaux délivrés par les capteurs 5, $8_1$ et $8_2$ respectivement.

Les signaux des vitesses d'embrayage sont issus de capteurs de vitesse inductifs disposés face à une roue dentée, tout comme pour le régime moteur. Une division de fréquence de ces signaux dans des circuits diviseurs $D_1$, $D_2$ et $D_3$ du calculateur 1 permet de ramener son nombre d'impulsions à N par tour (N = 3 dans le cas d'un moteur à six cylindres). La recommandation des trois impulsions par tour est impérative pour effectuer une mesure d'accélération qui ne soit pas perturbée par les irrégularités cycliques dues au moteur thermique.

Grâce à cette division, une mesure d'accélération est possible pendant les phases de transfert d'embrayage, ce qui permet de corriger, entre deux commandes du circuit 4 régulateur de pression, la consigne de pression nécessaire à l'obtention de l'accélération véhicule souhaitée. Pour un exemple particulier de passages de rapport en montant autour de 1700 tours/minute, la mesure d'accélération a lieu environ toutes les 12 ms.

Les impulsions issues des circuits diviseurs entrent dans des compteurs $C_1$ à $C_3$ périphériques du microprocesseur 12 pilotés par une horloge interne H délivrant une mesure précise de période sur 16 bits par exemple à partir de laquelle le microprocesseur va calculer la dérivée de chaque vitesse par comparison avec la valeur précédente acquise.

Dans un système classique, le temps de passage T est de l'ordre de 400 ms.

Comme cela a été dit auparavant, le calculateur 1 de gestion coupe l'injection de carburant pour diminuer le couple moteur pendant la phase de transfert d'embrayage, de sorte que l'écart entre $C_M$ et $C_{E_1}$ sera plus élevé réduisant alors T. De plus en choisissant des coefficients de régulation du régime moteur qui soient élevés, la coupure d'injection sera franche et le couple thermique $C_M$ transmis sera faible. Quant au couple $C_{E_2}$ dans l'embrayage $E_2$, il est contrôlable par la pression dans celui-ci, laquelle est calculée en fonction de l'accélération véhicule souhaitée.

Le confort du passage entre deux rapports est assuré par le choix des coefficients de régulation de l'accélération de sortie et de la pression d'embrayage.

Cette optimisation du temps de passage divise environ par 3 l'énergie dissipée ou absorbée dans les embrayages pendant les transferts sous couple. Le gain, en plus du confort et de la rapidité de passage d'un embrayage à l'autre, permet d'augmenter la durée de vie des embrayages alors moins sollicités.

Ce qui vient d'être décrit précédemment à propos du transfert d'énergie en montée de rapport est également valable en descente de rapport mais deux cas sont à distinguer pour la stratégie de régulation de pression que le calculateur 1 va élaborer.

Le premier cas concerne un véhicule en côte avec un couple moteur positif : le calculateur 1 de gestion décide de rétrograder pour reprendre une certaine accélération.

Le second cas concerne un véhicule en descente avec un couple moteur négatif : le calculateur décide de rétrograder pour diminuer sa vitesse, évitant ainsi l'emballement du véhicule.

Dans les deux cas, le calculateur électronique 1 demande une consigne de pression de ligne nulle pour ouvrir l'embrayage de départ $E_2$ le plus rapidement possible.

Dès que le calculateur 1 détecte un glissement sur cet embrayage $E_2$, il commande le pilotage de l'embrayage $E_1$ et la consigne de pression est alors égale à une valeur permettant son remplissage. Simultanément, le calculateur 1 se substitue au calculateur électronique 2 d'injection pour transmettre une consigne prioritaire de débit de carburant à injecter dans les cylindres dans le but d'asservir le régime moteur N à la vitesse $V_{E_1}$ de l'embrayage $E_1$.

La distinction entre les deux cas de fonctionnement intervient au niveau des gains utilisés dans l'asservissement du régime moteur afin d'obtenir deux types de transfert selon le cas considéré. Le calculateur 1 de gestion identifie ces deux cas par le signe du couple présent avant l'ordre de rétrogradation.

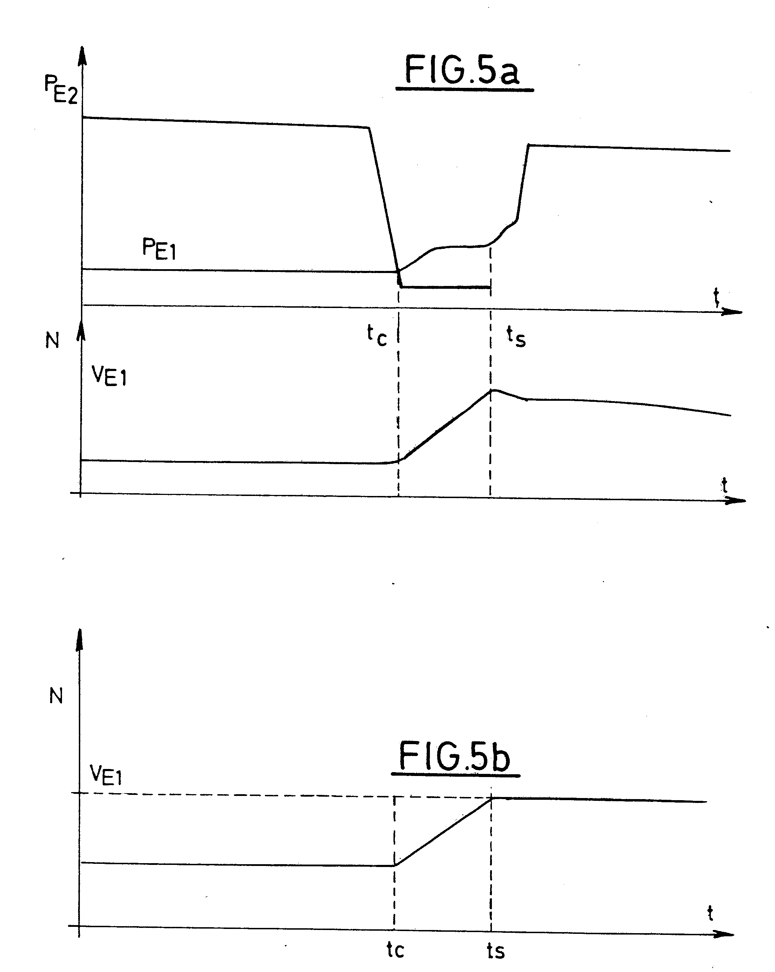

La figure 5a représente l'évolution dans le temps de la pression dans les embrayages et du régime moteur N, dans le cas d'un véhicule montant une côte. Le couple moteur est positif, c'est le moteur qui accélère le véhicule. Il est alors nécessaire de serrer l'embrayage $E_1$ quand la vitesse moteur N est légèrement supérieur à la vitesse de synchronisme $V_E$, à l'instant $t_s$ afin de ne pas inverser les jeux dans la boîte de vitesses, sinon on obtient une inversion du couple moteur. Ce phénomène transitoire est obtenu en imposant des gains élevés d'asservissement réalisant un dépassement de la consigne de régime moteur. Le remplissage de l'embrayage $E_1$ a lieu entre l'instant $t_c$ de détection sur $E_2$ et l'instant $t_s$ de synchronisme entre l'embrayage $E_1$ et le moteur.

La figure 5b représente l'évolution dans le temps du régime moteur dans le cas d'un véhicule en descente. Les pressions $P_{E_1}$ et $P_{E_2}$ dans les embrayages $E_1$ et $E_2$ évoluent comme sur la figure 5a.

Le couple transmis est négatif, c'est le véhicule qui entraîne le moteur. Il faut que l'embrayage $E_1$ soit serré quand le régime moteur est inférieur à la vitesse de synchronisme pour ne pas inverser les jeux dans la boîte de vitesses.

En conclusion, l'invention présente l'avantage appréciable d'apporter un gain énergétique par rapport à un dispositif classique. Dans le cas d'un passage de rapport sous couple, en montant, le temps de passage T répond à la formule suivante :

$$T = \frac{\Delta V}{\gamma_M} = \frac{V}{\dfrac{C_M - C_{E_2}}{I_M}} = \frac{\Delta V \times I_M}{C_M - C_{E_2}}$$

avec $\Delta V$ = écart de régime moteur nécessité par la raison de la boîte,
$\gamma_M$ = décélération obtenue sur la vitesse moteur,
$I_M$ = inertie moteur
$C_{E_2}$ = couple transmis par l'embrayage $E_2$.

Etant donné que $C_{E_2}$ est toujours supérieur au couple moteur maximum à transmettre, pour protéger l'embrayage, $(C_M - C_{E_2})$ est négatif et $\Delta V$ aussi. Donc en coupant l'injection pendant le transfert, on diminue le couple moteur, on augmente ainsi l'écart $(C_M - C_{E_2})$, et de ce fait on diminue le temps T. On peut ajouter que le procédé de commande selon l'invention permet de régler indépendamment par les coefficients d'asservissement le temps de passage des rapports et le confort souhaité ; ce qui permet de l'adapter aisément à un autre type de groupe motopropulseur.

## Revendications

1. Dispositif de commande électronique d'un groupe motopropulseur dont le moteur est à injection pilotée par un calculateur électronique et dont la boîte de vitesses est du type à passage des rapports sous couple, caractérisé en ce qu'il comprend :
- un calculateur électronique (1) de gestion du groupe motopropulseur,
- un circuit (4) de régulation de pression hydraulique dans la boîte de vitesses,
- de capteurs (5, $8_1$ et $8_2$) de vitesse moteur (N), et de vitesse d'embrayages ($V_{E_1}$ et $V_{E_2}$) ;
le calculateur (1) effectuant simultanément lors des passages sous couple le contrôle du couple moteur à transmettre en commandant l'injection de carburant dans le moteur et le contrôle de l'accélération du véhicule en commandant la pression hydraulique délivrée dans les embrayages par le circuit régulateur (4).

2. Procédé de commande mis en oeuvre par le dispositif selon la revendication 1, caractérisé en ce que le contrôle du couple moteur à transmettre est réalisé par les étapes suivantes :
- détection de la commutation hydraulique entre les embrayages, par le calculateur (1),
- lecture de la vitesse de l'embrayage ($E_2$) à piloter par le calculateur (1),
- coupure de l'injection de carburant dans les cylindres par le calculateur (1) pour asservir le régime moteur (N) à la vitesse de l'embrayage ($E_2$).

3. Procédé de commande mis en oeuvre par le dispositif selon la revendication 1, caractérisé en ce que le contrôle de la pression hydraulique dans les embrayages est réalisé par les étapes suivantes :
- la mesure analogique de la pression (P) existant dans le circuit régulateur (4), par le capteur (6),
- la conversion analogique-numérique de cette valeur de pression dans un circuit (11),
- la comparaison de cette pression (P) mesurée avec une pression de consigne ($P_c$) calculée par le microprocesseur (11) en fonction du couple moteur à transmettre et de l'accélération véhicule demandée,
- la détermination d'une fréquence de pilotage ($f_e$) de l'électrovanne du régulateur de pression (4) par chargement d'un compteur (13),
- le chargement dans un compteur (14) du temps de commande ($t_d$) d'ouverture de l'électrovanne élaboré par le microprocesseur (11),
- la création d'un courant (1) d'appel-maintien de l'électrovanne par un circuit d'interface (15).

# FIG.1

0278856

FIG.2

# FIG.3

Micro-processeur  12

Compteur 1  13

Compteur 2  14

$f_c$

$S_c$

Interface  15

C.A.N.  11

I

P

Capteur  6

1

4

0278856

**FIG.4**

Régulateur de Pression — 4

Interface — 15

Compteur — 13
Compteur — 14

Micro-processeur — 12

C.A.N. — 11

$E_1$, $E_2$, $8_1$, $8_2$, 6, P

$V_{E1}$, $V_{E2}$, N

$D_1$, $D_2$, $D_3$

$C_1$, $C_2$, $C_3$

H

1

0278856

FIG.5a

FIG.5b

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | AUTOMOTIVE ENGINEERING, vol. 90, no. 8, août 1982, pages 35-42, Society of Automotive Engineers, Inc., Dallas, US; "Microprocessors applied to automobile transmission control" * Page 35, colonne 1, ligne 16 - page 36, colonne 3, ligne 7; page 37, colonne 1, lignes 2-45; colonne 2, ligne 43 - colonne 3, ligne 28; page 39, colonne 1, ligne 7 - page 40, colonne 1, ligne 8; colonne 3, ligne 2 - page 42, colonne 1, ligne 29 * --- | 1-3 | B 60 K 41/10 |
| A | DE-A-3 506 363 (DIESEL KIKI CO. LTD.) * Page 4, lignes 1-24; page 5, lignes 20-24; page 7, lignes 15-33; page 8, lignes 17-30; page 9, lignes 6-26; page 10, lignes 20-37; page 12, lignes 17-24; page 15, lignes 5-17; page 16, lignes 17-24; revendications 1-4; figures 1-3B * --- | 1-3 | |
| A | DE-A-1 954 757 (NISSAN) * Page 2, lignes 1-19; page 3, lignes 3-22; page 4, ligne 6 - page 5, ligne 22; page 10, ligne 4 - page 11, ligne 19; page 68, ligne 2 - page 69, ligne 12; page 72, lignes 9-18; page 74, ligne 15 - page 75, ligne 11; page 76, lignes 6-25; page 77, ligne 21 - page 79, ligne 1; page 88, lignes 14-23; page 89, ligne 22 - page 90, ligne 6; page 91, ligne 10 - page 92, ligne 3; revendications 1,9,30; figures 1-4,20,21,23a * ----- | 1-3 | **DOMAINES TECHNIQUES RECHERCHES (Int. Cl.4)** B 60 K |

Le présent rapport a été établi pour toutes les revendications

| Lieu de la recherche | Date d'achèvement de la recherche | Examinateur |
|---|---|---|
| LA HAYE | 04-05-1988 | GEYER J.L. |

EPO FORM 1503 03.82 (P0402)